# EUROPEAN PATENT APPLICATION

(11) **EP 1 715 621 A2**
(43) Date of publication of application: **25.10.2006**
(21) Application number: 06252164.6
(22) Date of filing: 21.04.2006
(51) Int. Cl.: H04L 12/24

(54) **System and method for accessing devices with a console server**

(30) Priority: 22.04.2005 US 112146; 11.07.2005 US 179338
(71) Applicant: DIGI INTERNATIONAL INC., Minnetonka, MN 55343 (US)
(72) Inventor: Tucker, Ben, Bloomington, Minnesota 55437 (US); Elliger, Jan, 33334 Guetersloh (DE)
(74) Representative: Collins, John David

(57) **Abstract**

A method is disclosed of accessing a plurality of devices, for use with a console server having a user interface, a network connection and a plurality of ports, the plurality of devices including one or more first devices and one or more second devices and each first device including a console port, and the method comprising: communicatively coupling a port of the console server to the console port of each of the one or more first devices; communicatively coupling the network connection of the console server to each of the one or more of the second devices across a network; accessing device management processes on the connected first and second devices via the console server; and outputting information regarding each of the connected first and second devices via the console server user interface.

## Description

The present invention pertains generally to console servers, and more particularly, but not by way of limitation, to control of devices by a console server.

When communication with a piece of data equipment across the network is lost, out-of-band access to the data equipment can often be used to regain control. Out-of-band access means access that is not linked to the network stack; it provides access outside the network link for control and configuration of data equipment.

Many pieces of data equipment are equipped with console ports. Console ports are serial ports; each console port typically is handled by the core of the operating system within the piece of data equipment, and not by any subordinate instance. The console port is often, therefore, the most reliable path to communicate with the kernel. For many pieces of data equipment, the console port is the only mechanism that can be used for initial configuration and emergency management.

Console servers connect to console ports in order to provide "out-of-band" access to data equipment. A console server typically includes a network connection and one or more serial ports. Devices such as servers, routers, switches, private branch exchanges (PBX), firewalls, and other such network devices can be controlled by the console server through the console server's serial ports.

Console servers are controlled in turn via the network connection. They typically can be accessed and maintained from anywhere on the network, providing great flexibility in data center monitoring and management. Software on the console server can, for instance, monitor the console output of each piece of data equipment and notify the administrator regarding critical situations or can log user interaction or messages from the console port and document them for audit logs.

In a typical console management application, like a data center, most of the devices connected are in a close proximity. Many companies, however, have devices scattered throughout their facilities in closets or in remote sites. Such devices would benefit from console server management. What is needed is a system and method for controlling data equipment remote from a console server.

According to one aspect of the invention, a system and method is provided for accessing a plurality of devices with a console server. A port of an intermediate device is communicatively coupled to the console port of one of the devices. A port of the console server is communicatively coupled to the console port of another one of the devices. A network connection of the console server is communicatively coupled to the network connection of the intermediate device. Device management processes on the connected devices are accessed via the console server and information regarding the connected devices is output via (for example displayed on) the console server user interface.

According to another aspect of the present invention, a system and method is provided for accessing a plurality of devices with a console server. The plurality of devices include a first device having a console port and a second device having a network connection. A port of a console server is communicatively coupled to a first device. A network connection of the console server is communicatively coupled to the network connection of the second device across a network. Device management processes on the connected first and second devices are accessed via the console server and information regarding the connected first and second devices is displayed on the console server user interface.

The present invention can be implemented in any convenient form, for example using dedicated hardware, or as a mixture of dedicated hardware and software. Computer-implemented aspects of the present invention may encompass computer software implementable on a programmable device, in which case the computer software can be provided to the programmable device using any conventional carrier medium. The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

Although each aspect of the present invention has been defined independently, it will be appreciated that any part of one aspect can be combined, where appropriate, with one or more parts of one or more other aspect(s) or features of the invention.

Embodiments of the present invention will now be described with reference to the accompanying drawings, in which:
FIG. 1 is a schematic illustration of a console server;
FIGS. 2 and 3 are a schematic illustration of a system of data equipment controlled by a console server;
FIG. 4 is a flowchart that illustrates a method of configuring a remote port;
FIGS. 5-18 are various screen shots in one embodiment of console server;
FIG. 19 is a flowchart that illustrates a method that includes determining information about a device from a port log;
FIG. 20 is a flowchart that illustrates a method that includes sending a probing character or sequence associated with an operating system and determining information about the operating system from the response;
FIG. 21 is a flowchart that illustrates a method that includes sending a probing character and analyzing a response;
FIG. 22 is a flowchart that illustrates a method that includes recognizing connection of a device to a second port and copying first port settings to the second port; and
FIG. 23 is a schematic illustration of a plurality of console servers connected through a network.

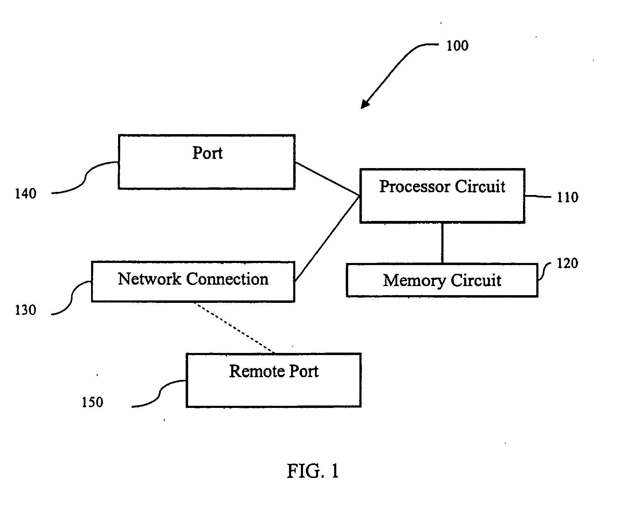

A schematic illustration of an example console server 100 is shown in Fig. 1. Console server 100 includes a processor circuit 110, a memory circuit 120, a network connection 130 and ports 140 and 150. In one example embodiment, ports 140 and 150 are serial ports. Examples of serial ports include RS232, RS 422 and RS 485 connections.

In the example shown, port 150 is a remote serial (or virtual serial) port accessed through network connection 130. In such an embodiment, console server 100 communicates over a network through a virtual serial port to a piece of data equipment as if the piece of data equipment was connected to a port 140.

In one example embodiment, each port 140 and 150 includes an on/off switch that allows automatic device detection or recognition to be turned on and off. Automatic device detection or recognition is described in "Recognition of Devices Connected to a Console Server," U.S. Patent Application No. 11/112146, the description of which is incorporated herein by reference. In one such embodiment, ports 140 and 150 also include an on/off switch that allows automatic updating of the port name to be turned on and off.

In one example embodiment, network connection 130 is an Ethernet port. In another example embodiment, network connection 130 is a connection to another type of network, such as a wireless network connection or a modem. In one example embodiment, console server 100 includes a PCMCIA card slot into which a network device is inserted.

In one example embodiment, network connection 130 couples console server 100 to a TCP/IP network, to the internet, or to a dial-up modem connection. In one such embodiment, communications with console server 100 are encrypted to provide secure access to console server 100 and to each of its connected devices.

In the embodiment shown in Fig. 1, network connection 130 is connected to the processor circuit 110. Network administrators can access ports 140 and 150 through processor circuit 110 by connecting through network connection 130. In an example embodiment, a server connected to port 140 is accessible by a computer that is coupled to network connection 130.

In one example embodiment, processor circuit 110 includes an integrated circuit on a chip. In one example embodiment, memory circuit 120 includes a RAM chip. In another example embodiment, memory circuit 120 includes a flash memory chip or a flash memory card.

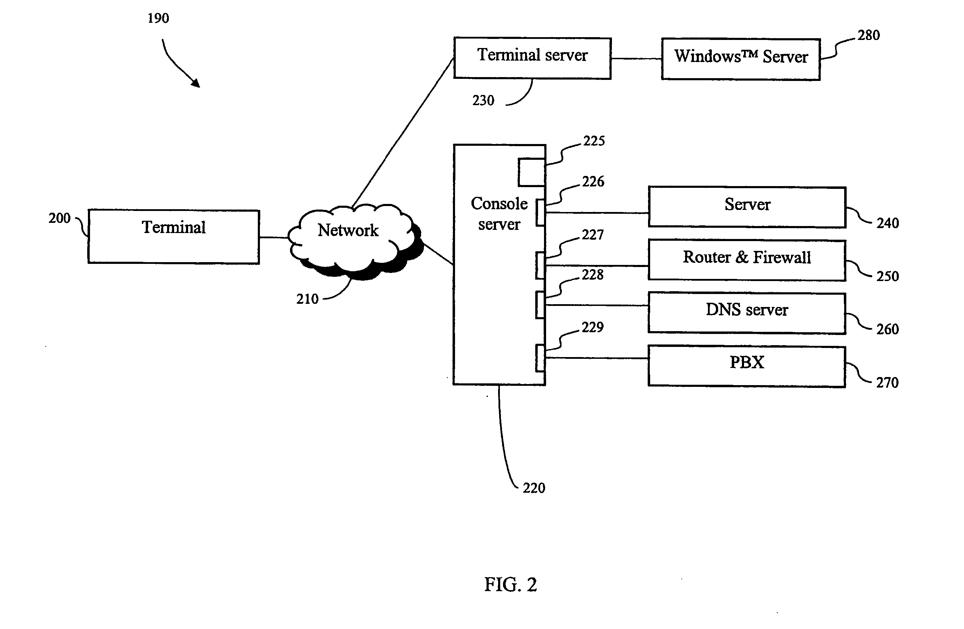

FIG. 2 is a schematic illustration of a system 190 in which a console server 220 is connected to data devices via ports 225-229. A terminal 200 controls the data devices through a console management program executing within console server 220. In one example embodiment, terminal 200 is a thin client. A personal computer such as a WINDOWS or Linux machine, or a workstation could be used as well. In one example embodiment, network 210 includes a TCP/IP network. A wireless network, internet connection, or a dial-up connection could be used as well.

In the example shown in Fig. 2, ports 225, 226, 227, 228, and 229 connect devices such as servers or network gear to console server 220. In the example shown in FIG. 2, port 226 is connected to a Linux server 240. Port 227 is connected to a router and firewall 250. Port 228 is connected to a DNS server 260. Port 229 is connected to a private branch exchange (PBX).

Console server 220 provides centralized management and configuration of data equipment such as routers, switches and servers from anywhere on network 210, over the internet, or through dial-up modem connections, even if the device to be configured is unavailable through network 210. Such an approach eliminates the need for system administrators to travel to remote data centers, since instead of connecting directly to the router or server with a laptop or terminal, system administrators now connect to console server 220 via telnet or Secure Shell (SSH).

In the embodiment shown in Fig. 2, console server 220 supports remote ports. Remote ports are ports that can be accessed by console server 220 through another device. PortServer® Terminal Servers from Digi International, for example, provide serial ports which can be accessed across a network using telnet or SSH protocol. In the example shown in Fig. 2, console server 220 is connected via a remote port 225 to a WINDOWS™ server 280 via terminal server 230. In one such embodiment, terminal server 230 is a PortServer® Terminal Server from Digi International.

Remote ports allow system administrators to use console server 220 as a central access system for any kind of text based out-of-band management. Even devices located in other locations within a facility or in remote sites can now be managed by a single console server 220.

Users can now manage remote servers simply by installing near the remote device a cost-effective device server or terminal server (such as terminal server 230), which seamlessly integrates with console server 220. The device/terminal server acts as a proxy to connect the new remote console port to console server 220.

Such an approach adds console server features to the remote devices, including central authentication and logging, increases scalability and provides for cost-effective expansion and centralized management and failure detection.

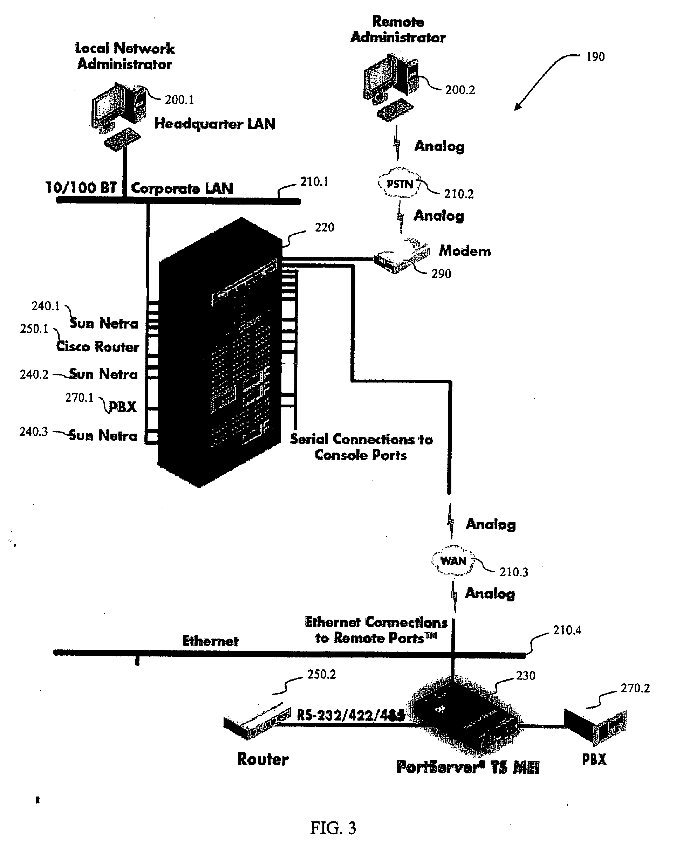

Another example embodiment of system 190 is shown in Fig. 3. In system 290 of Fig. 3, console server 220 is connected over its serial ports to modem 290, to Sun Netra servers 240.1, 240.2 and 240.3, to Cisco router 250.1 and to PBX 270.1. In addition console server 220 uses its remote ports to connect across networks 210.3 and 210.4 to terminal server 230, and through terminal server 230 to router 250.2 and PBX 270.2.

A local network administrator configures Sun Netra servers 240.1, 240.2 and 240.3, Cisco router 250.1, PBX 270.1 and 270.2 and router 250.2 by accessing console server 220 over network 210.1 using workstation 200.1. In addition, a remote administrator can configure Sun Netra servers 240.1, 240.2 and 240.3, Cisco router 250.1, PBX 270.1 and 270.2 and router 250.2 by accessing console server 220 over network 210.2 through modem 290 using computer 200.2.

Configuration of the remote port will be discussed next.

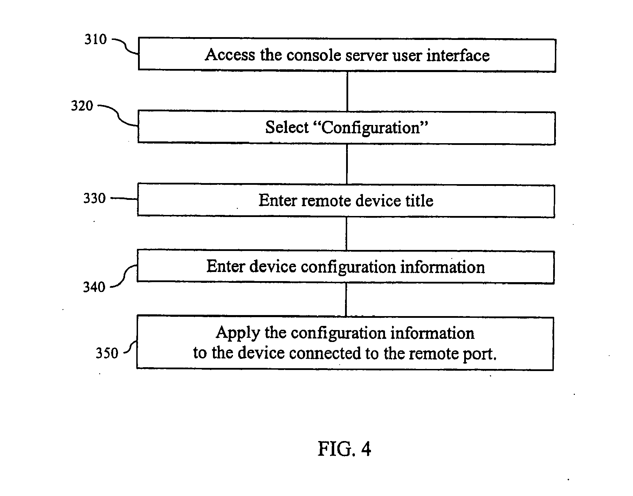

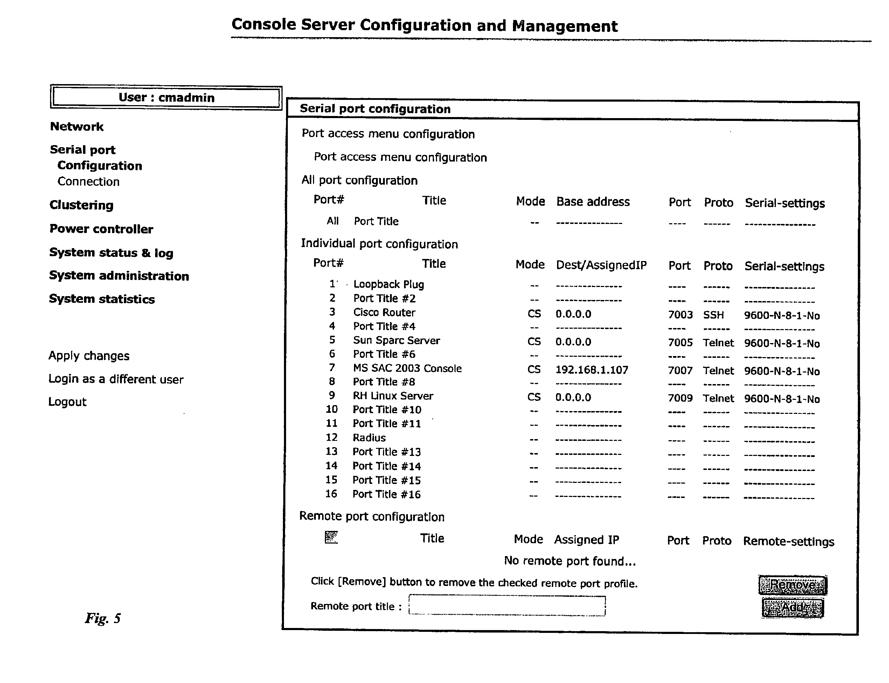

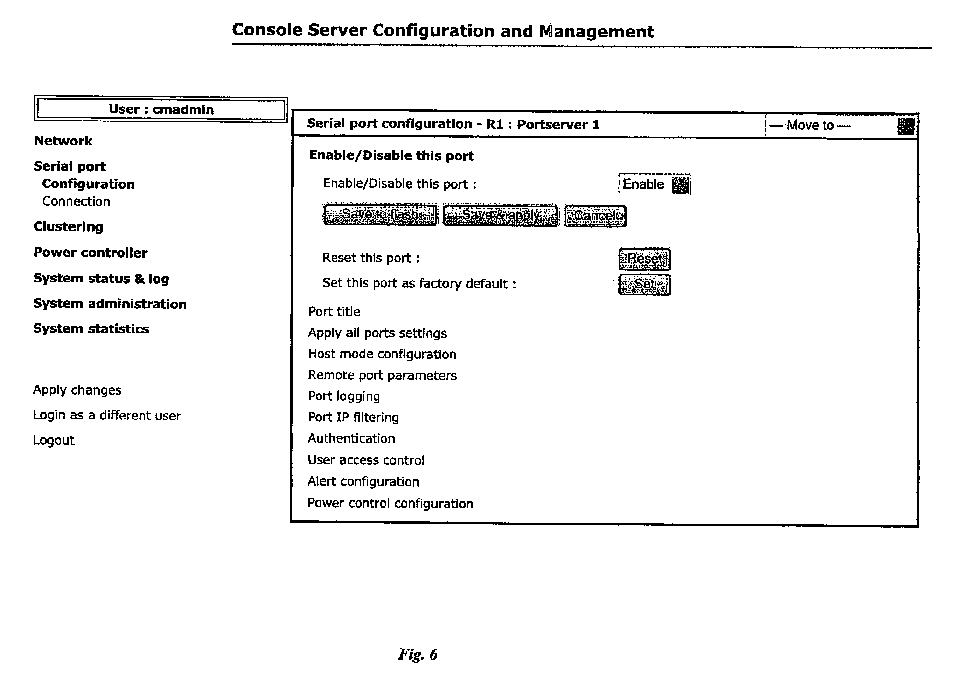

In one embodiment, a remote port is set up as shown in Fig. 4. In the example shown in Fig. 4, at 310, the user accesses the console server user interface. Control then moves to 320, where the user selects "Configuration". In one embodiment, console server 220 displays a configuration screen such as is shown in Fig. 5. Control then moves to 330, where the user enters a remote device title under the section marked "Remote Port" and selects "Add". Control then moves to 440, where the user enters device configuration information (see Fig. 6). Control then moves to 450, where the configuration information is applied to the device connected to the remote port.

In the embodiment shown in Fig. 6, the information that can be modified includes whether or not the remote port is enabled, the port title, the port settings, the host mode configuration, the remote port parameters, how and whether to perform port logging, port IP filtering, authentication method, user access control, alert configuration and power control configuration (if applicable).

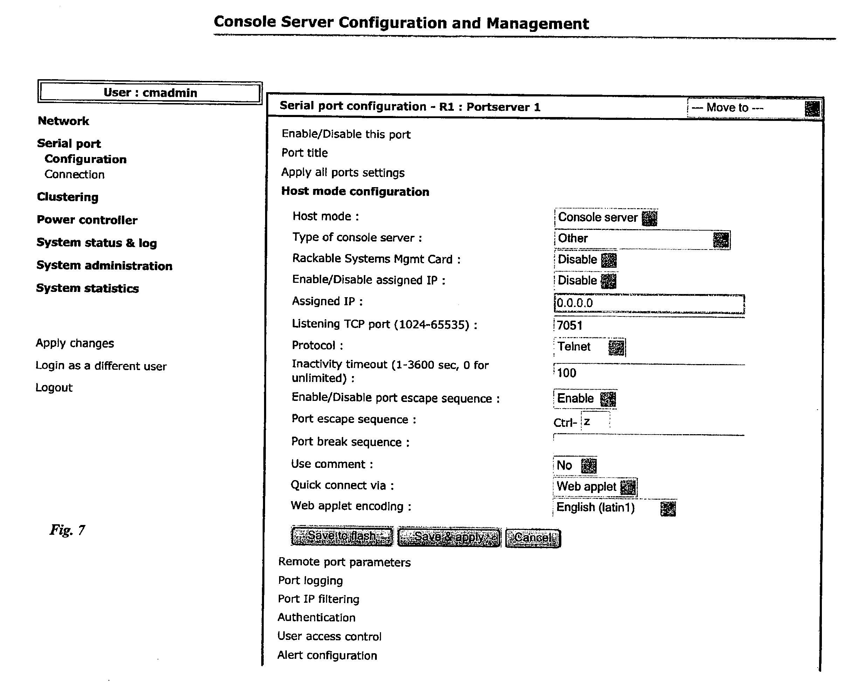

Host mode configuration is shown in Fig. 7. In the example shown in Fig. 7, host mode configuration includes host mode selection, selection of the type of console server, communications protocol and other parameters as shown.

Some example ports include a variety of host mode settings. An Activate MICROSOFT WINDOWS SERVER 2003 Web-UI setting or an Activate Rackable System Management Board Web-UI setting allows a user interface to be launched. An IP Address Per Port setting controls the number and type of IP addresses assignable to the port. A Protocol setting sets protocols such as telnet, secure shell (ssh), or raw. A Port Escape Sequence (^z) setting allows definition of a character sequence to reach an escape menu. A Port Break Sequence setting allows definition of the sequence to send a serial break signal. An Inactivity Timeout setting provides for disconnection after an amount of time, which is optionally specifiable.

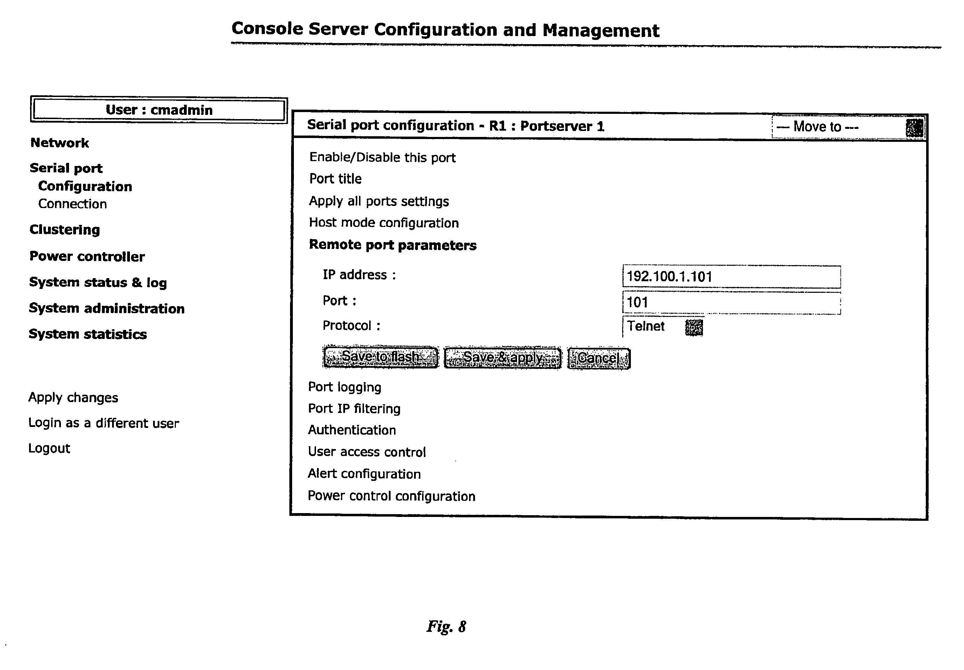

Remote port parameter selection is shown in Fig. 8. In the example shown in Fig. 8, the user can enter an IP Address for the remote port, and select a port and communications protocol. The IP address may be for the intermediate device (such as terminal server 230) or for the device being controlled itself.

In one such embodiment, the protocols that can be selected include Telnet, Secure Shell (SSH) and RawTCP.

In one embodiment, console server 220 includes the ability to set serial settings for each remote port. Serial settings include, for example, data transfer rate, data bits, parity, stop bits, flow control, and DTR (data terminal ready) behavior.

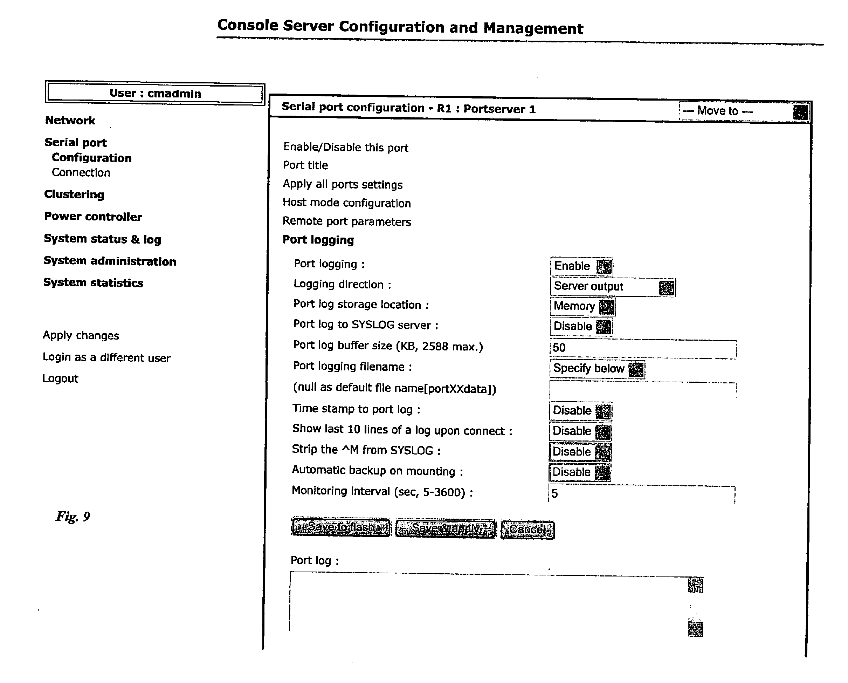

Port logging selection is shown in Fig. 9. In the example shown in Fig. 9, the user can enable port logging and select whether to log server output, user input, or both (with or without arrows). The user can select the port log storage location (e.g., memory or CF card) and whether to store the port log to the SYSLOG server. Other parameters can be selected as shown. Other settings include port-log size, port-log filename, timestamp (e.g. whether every message is time stamped), and Strip ^M (to strip ^M commands) settings.

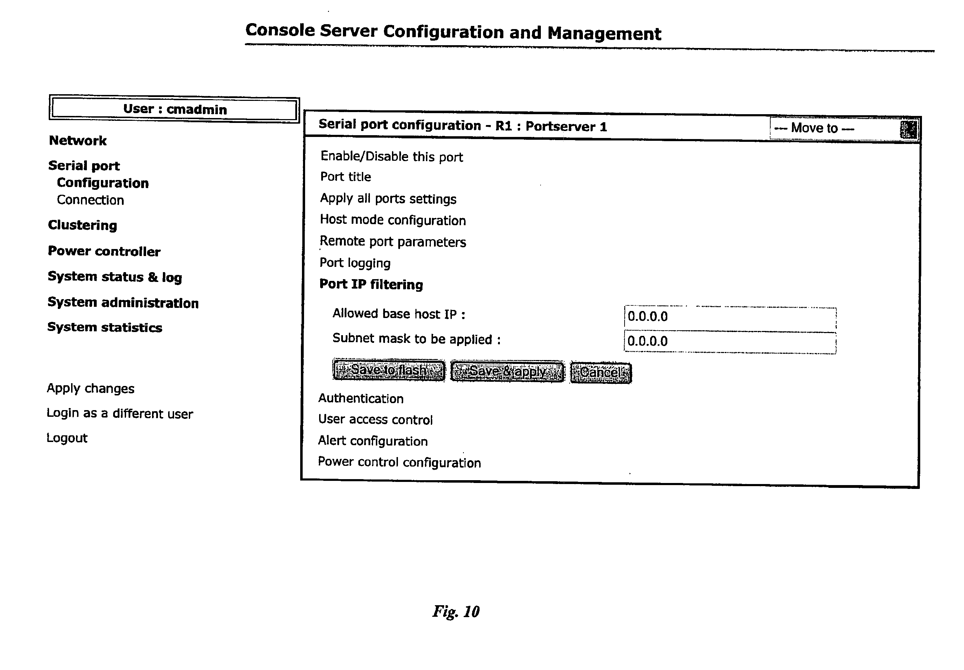

Port IP filtering is shown in Fig. 10. In the example shown in Fig. 10, the user can select an allowed base host IP address and a subnet mask as shown.

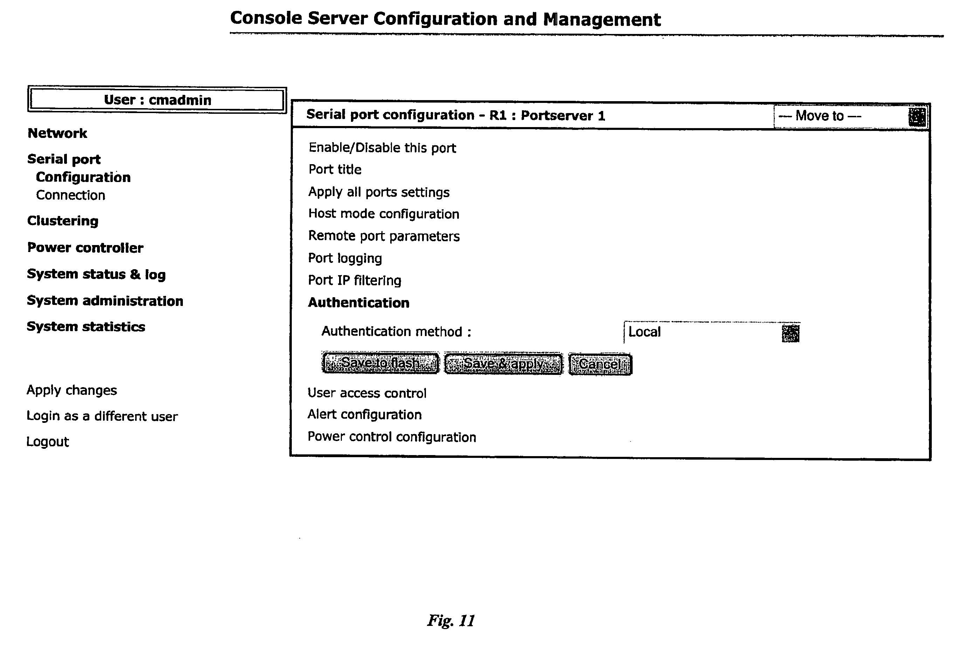

Authentication is shown in Fig. 11. In the example shown in Fig. 11, the user can select an authentication method to be used to restrict access to the device attached to the remote port. In one such embodiment, authentication may be based on local authentication, or through authentication based on a RADIUS server, a TACACS+ server, an LDAP server, a Kerberos server, custom PAM, or any combination thereof.

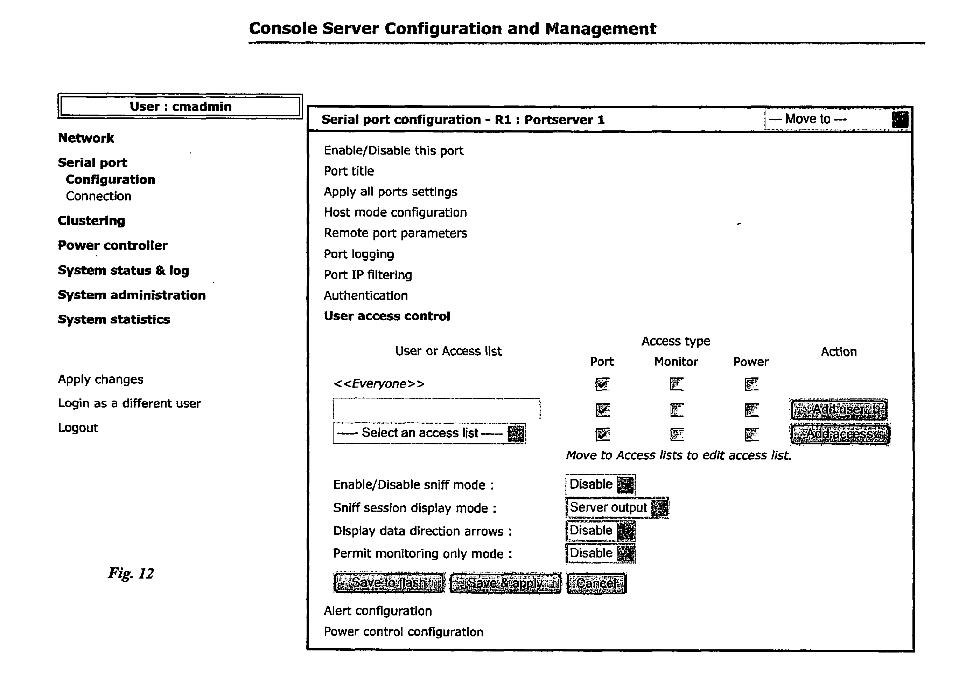

User access control is shown in Fig. 12. In the example shown in Fig. 12, access can be limited based on user identifier. In the example shown, user access can be determined by pointing to an access list as well.

In an example, user access is configurable according to operating system, so that particular users have access only to devices having specified operating systems. In another example, user access is configurable by device. Other examples include Read only, Read-write, and Power control settings.

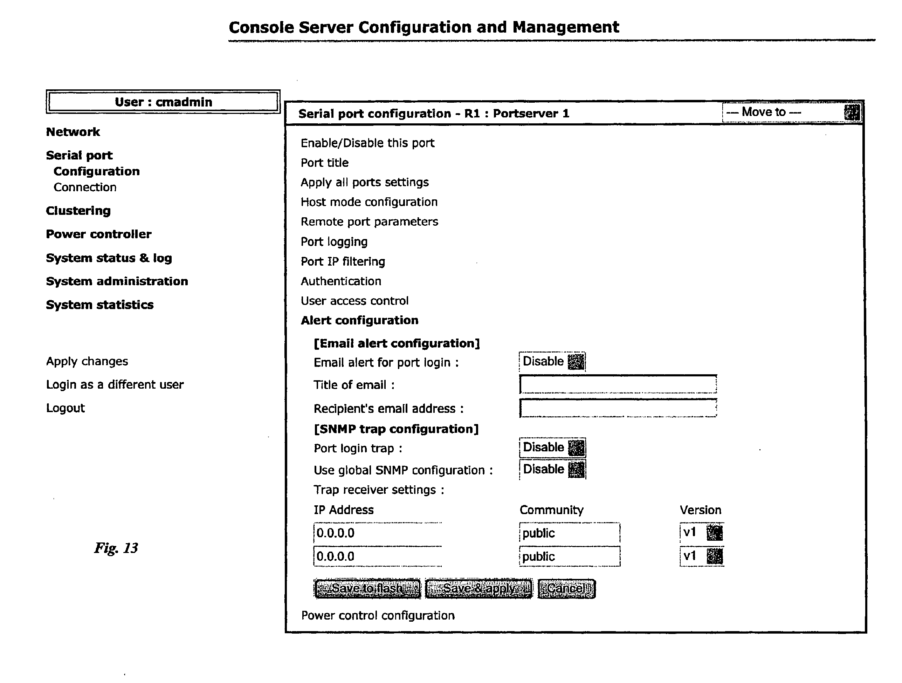

Alert configuration for devices connected to the remote port can be set as shown in Fig. 13. In the example shown in Fig. 13, the user can set up an email alert configuration and an SMNP trap configuration.

In the embodiment shown, the Email Notification setting determines, for example, the title and recipient of an alert. In an example, when a device from a particular source (e.g. CISCO) is connected to a port, an alert message is sent to appropriate recipients associated with the source (e.g. CISCO operators.)

An SNMP (simple network management protocol) trap setting determines the recipient of SNMP traps

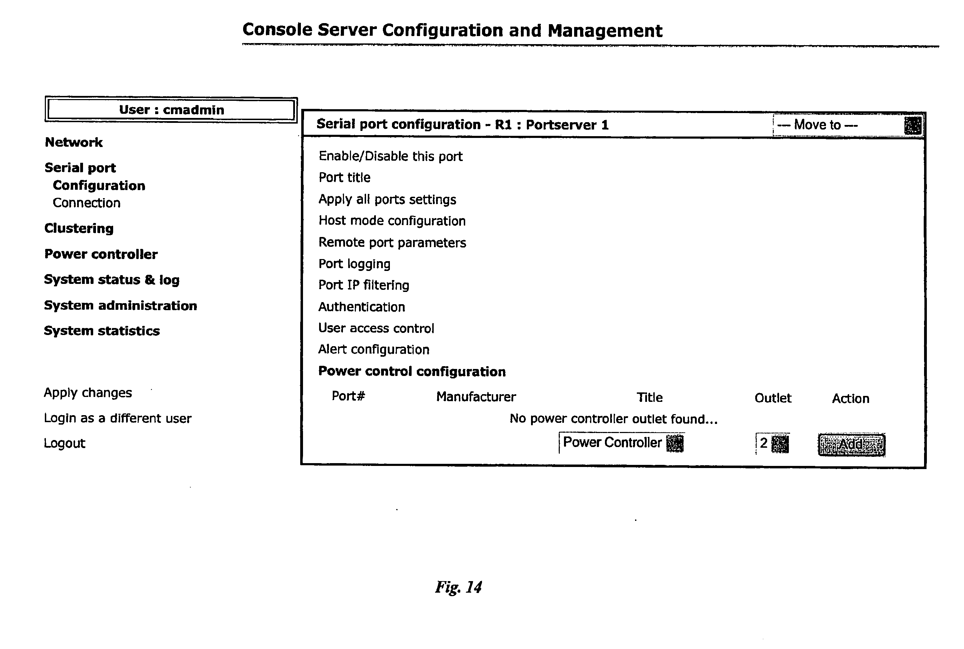

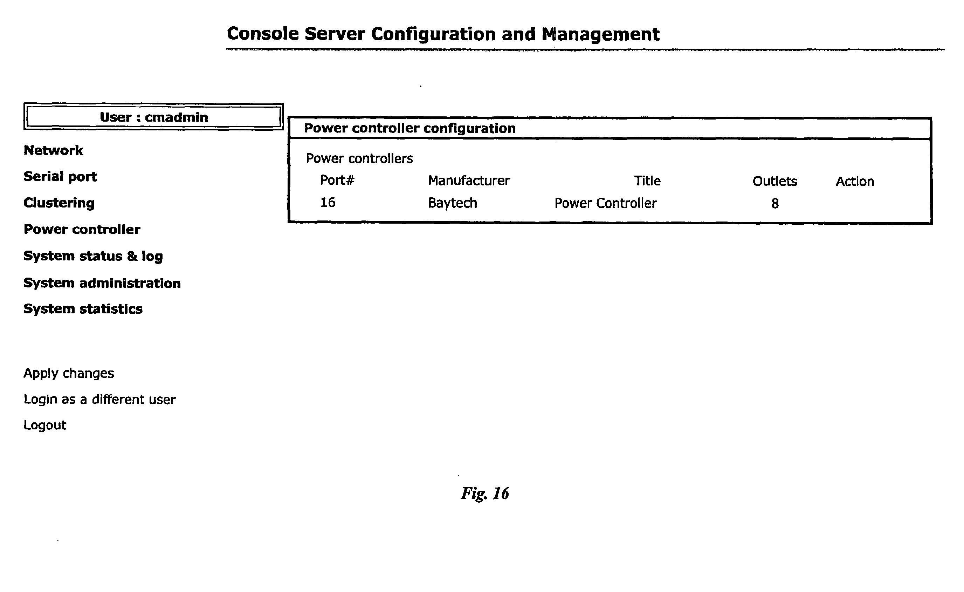

Sometimes a power controller will be attached to the device connected to the remote port. In those situations, console server 220 can control the power to the device using the configuration setup shown in Fig. 14. Similarly, console server can control a power controller attached to devices connected to its local ports as shown in Fig. 16.

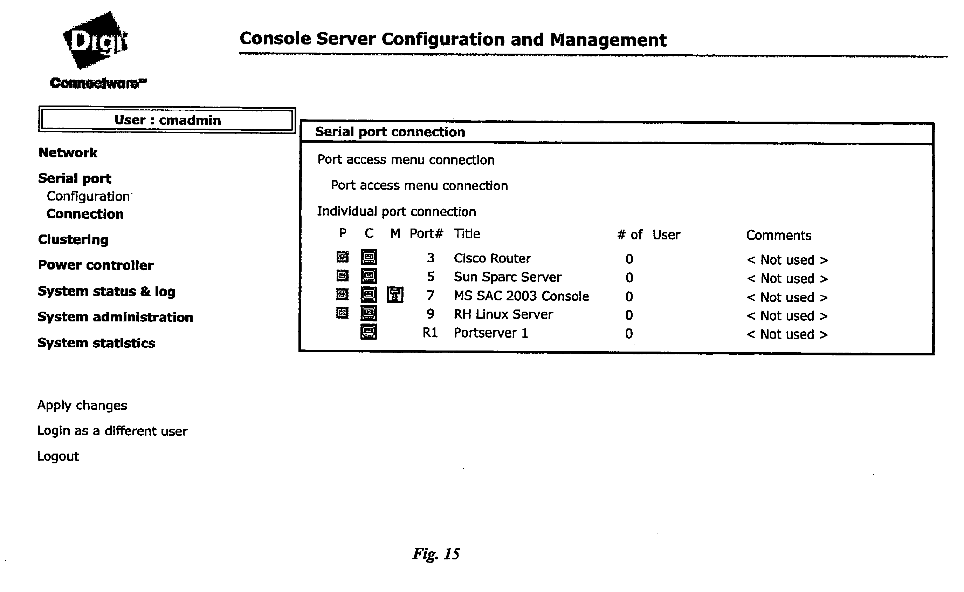

In one embodiment, once all ports and remote ports have been configured, they are displayed as shown in Fig. 15.

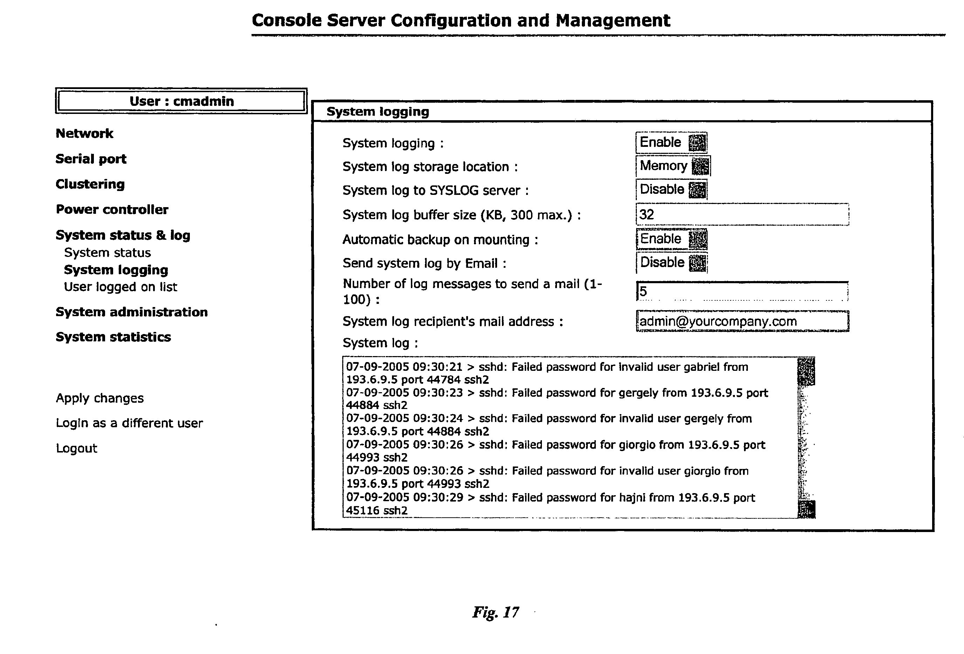

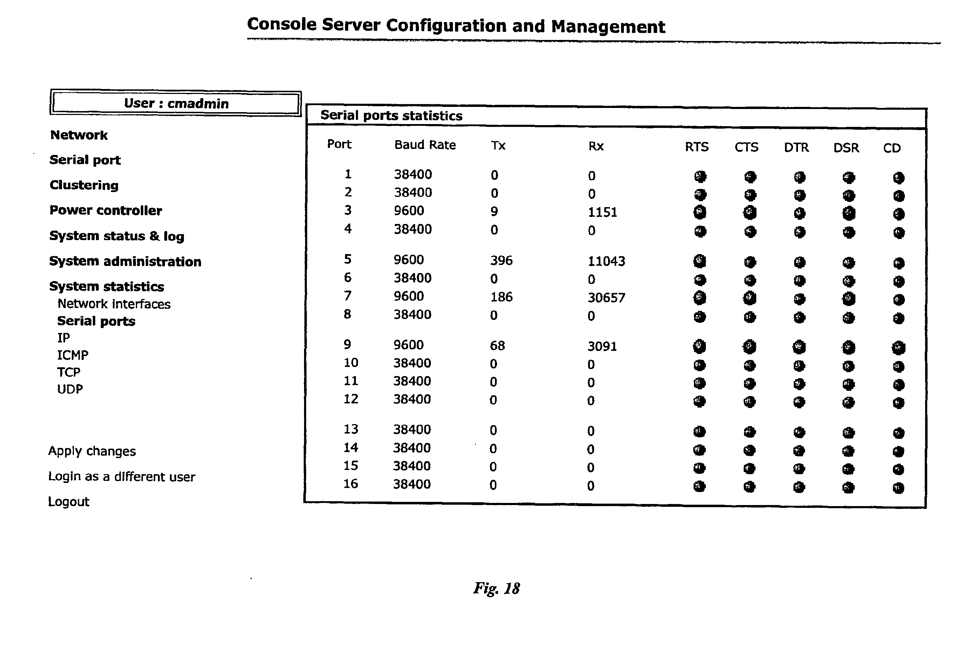

System status and logging can be displayed for console server 220 as shown in Fig. 17. System statistics can be displayed as well. Fig. 18 displays one example of monitoring serial ports for console server 220. The network interfaces and various types of network traffic can be monitored as shown there as well.

Device recognition will be discussed next.

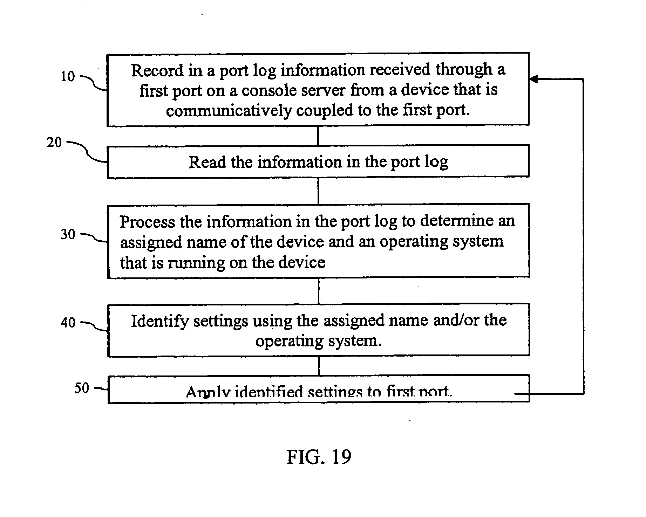

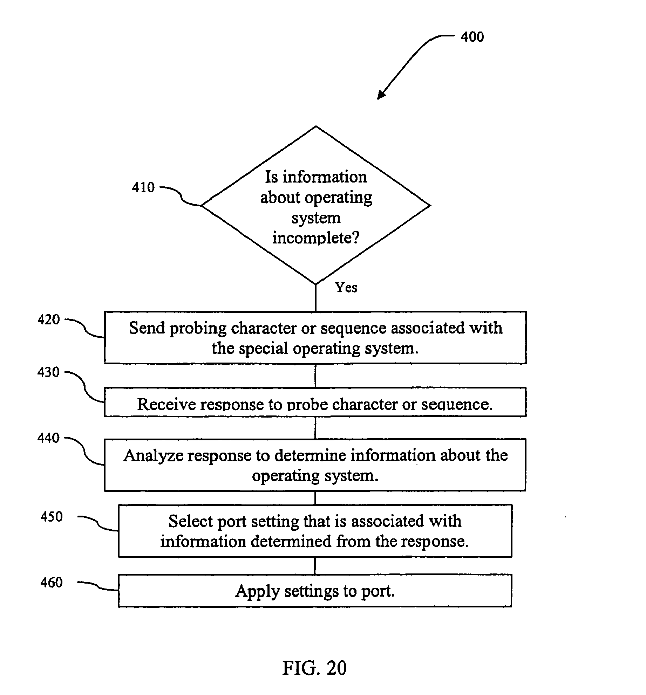

A device connected to a console server is recognized using information obtained through a port to which the device is connected. In an example, the console server "passively" examines a connected device by examining information in a port log. In the example illustrated in FIG. 19, information such as the name of the device or the operating system running on the device is determined from information in a port log. In another example, the console server "actively" examines a connected device by sending a probing character or string and examining a response. A flowchart illustrating a method that includes sending a probing character or sequence associated with an operating system is provided in FIG. 20.

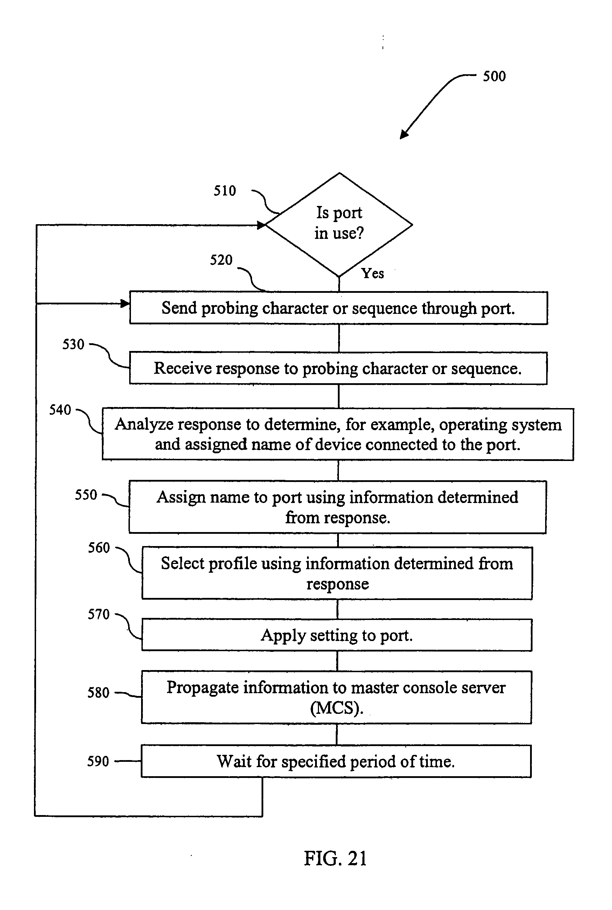

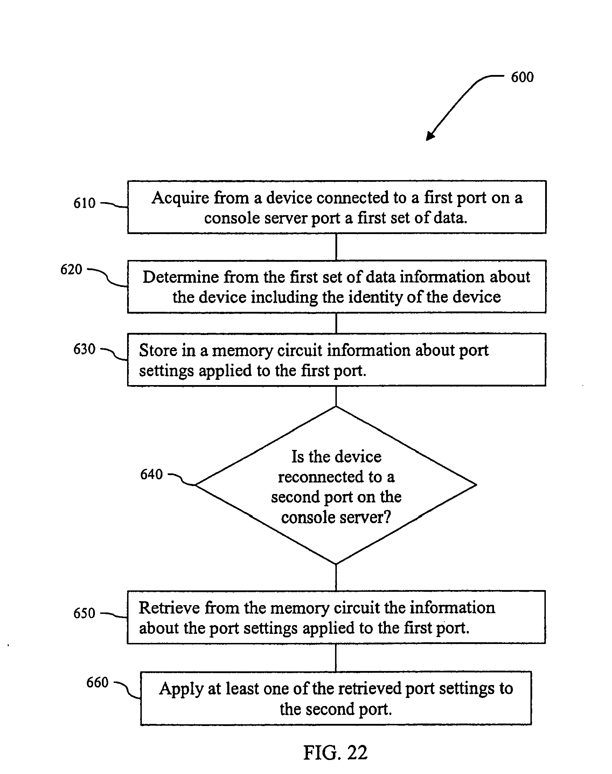

FIG. 21 is a flowchart that illustrates a method in which a profile is identified using a response to a probing character or sequence. In an example, a console server port is dynamically reconfigurable using information obtained from a port log, or from a response to a probing character or string. Port settings, optionally specified by a profile, are applied to the port based upon information that is determined about the port. In the example illustrated in FIG. 22, where a device previously connected to a first port is recognized at a second port, at least one port setting from the first port is applied to a second port. In some examples, automated recognition of devices and/or configuration of ports speed up the initial configuration of a console server and/or reduces administrative overhead associated with managing the console server.

Referring now to the example method illustrated by the flowchart in FIG. 19, at 10 information received through a port on a console server 220 from a device that is communicatively coupled to the port is recorded in a port log. In an example, the device is physically connected to the port, for example with a serial cable. In another example, the device is connected to the port through a network connection, such as a LAN network, the internet, and/or a wireless network. In an example, a boot sequence is recorded in the port log. At 20, information, such as the boot sequence, is read from the port log. At 30, information from the port log is processed to determine information about the device, such as the assigned name (hostname) of the device, and an operating system (e.g. WINDOWS, CISCO EOS, SUN Solaris, LINUX) that is running on the device. In another example, the type of device (e.g. SUN) or the location of the device is determined from the port log. In an example, a script is run that determines the name of the device and the operating system. In an example, the script determines not only the operating system, but also the version number of the operating system (e.g. WINDOWS Server 2003). In an example, the script is user-configurable. In an example the script uses standard bash commands and writes output to one or more files.

Returning to FIG. 19, at 40, information about the device, such as the assigned name and/or the operating system, is used to identify port settings. In an example, a settings profile is identified. In an example, the profile is associated with the assigned name of the device and/or the operating system of the device. At 50, identified settings are applied to the port. In an example, the settings are specified by a profile. In an example, a port name is assigned to the port such as main-router. In an example, the assigned port name provides information about the device that is connected to the port, such as the assigned name of the device and the operating system that is running on the device. In an example, a user access setting is applied to the port. An example user access setting applied to a port allows only specified users access to a device. In an example, user access is controlled by device, device type, or operating system (e.g. only administrators are allowed access to devices having a certain operating system.) In another example, an alert setting controls a recipient list for alerts relating to the port. In an example, operators or administrators of a specific operating system are sent an alert relating to a device running the specific operating system.

In an example, the port log is periodically examined to identify changes in the connected device or the operating system running on the connected device. In an example, the timing of the periodic examination of the port log is user-configurable. In an example, the port log is examined every five minutes. In an example, the console server waits an amount of time and examines the port log again to confirm the change and avoid erroneous setting change. If a change is confirmed, port settings and/or the port name are updated. In another example, the port log is examined when a device is connected or disconnected to the port. In an example, the ports of a console server are dynamically reconfigurable as the connection of devices to ports is changed. For example, if cables are mixed up after disconnecting and reconnecting devices, an example console server automatically updates port names and/or port settings.

FIG. 20 is a schematic illustration of another example method 400. At 410, a processor examines information received from device through a port to determine whether the information about the operating system is incomplete. For example, some operating systems, such as WINDOWS 2003, provide a limited response to a probing character or string, and a particular probing string causes the device to send more complete information that includes, for example, server name, revision level, and/or patch level. In another example, information in the port log about an operating system is incomplete, and a probing character or sequence is sent to obtain further information. Returning to FIG. 20, if the information about the operating system running on the device is incomplete, or alternatively if a particular operating system is running on the device and known to provide incomplete information (e.g. WINDOWS 2003), at 420, a probing character or probing sequence associated with the operating system is sent through the port to the device. At 430, a response to the probe character or sequence is received through the port. At 440, the response is analyzed to determine information about the operating system running on the device, such as a server name, operating system revision level and/or operating system patch level. At 450, one or more port settings associated with the information determined from the response is selected. At 460, the one or more settings are applied to the port. In an example, the port is also named to convey information about the operating system running on the device connected to the port.

An example "active" device recognition method 500 is illustrated in the flow chart provided in FIG. 21. At 510, a console server optionally determines whether a port is in use. At 520, a probing character or probing sequence is sent through the port. In an example, the probing character is an Enter (CR = 0x0d). At 530, a response to the probing character or probing sequence is received through the port. At 540, the response is analyzed to determine information about the device, such as the operating system and/or the assigned name (hostname) of the device connected to the port. At 550, a name is assigned to the port using information determined form the response. In an example, the name includes information about the device, such as the hostname and/or the operating system. At 560, a profile is selected using the information about the device determine from the response. In an example, a profile associated with the device name is selected. In another example, a profile associated with the operating system, a device type (e.g. SUN), or a device location is selected. In some examples, the profile is selected based upon a combination of the device name, device type, operating system, device location, or other device characteristics. At 570, settings are applied. In an example, the settings are specified by the profile. At 580, information is propagated to a master console server. At 590, the console server waits a specified period of time (e.g. five minutes), and then returns to 510 or 520, at which point a probing character is again sent through the port. FIG. 22 provides a flow chart that illustrates another example method 600. At 610, a first set of data is acquired from a device connected to a first port on a console server. In an example, the first set of data is a boot sequence recorded in a port log. In another example, the first set of data is a response to a probing character or sequence. At 620, information about the device including, for example, the identity of the device, is determined from the first set of data acquired from the device. In an example, the identity of the device includes the device type (e.g. SUN), the assigned name (hostname) of the device, and/or the operating system that is running on the device. At 630, information about port settings applied to the first port is stored in a memory circuit. In an example, a new profile is generated for the device. At operation 640, the console server recognizes the device when it is reconnected to a different second port on the console server. In an example, the console passively recognizes the device by examining a port log for the second port. In another example, the console server actively recognizes the device by sending a probing character or sequence (probe string) and analyzing the response from the device connected to the port. At 650, information about the port settings applied to the first port is retrieved from the memory circuit. In an example, a new template created by the console server is retrieved from the memory circuit. At 660, at least one of port setting is applied to the second port. In an example, the at least one port setting applied to the second port is determined from the information about the port setting retrieved from the memory circuit. In an example, the at least one port setting applied to the second port is specified by a profile. In an example, the at least one port setting applied to the second port is the same as a port setting applied to the first port.

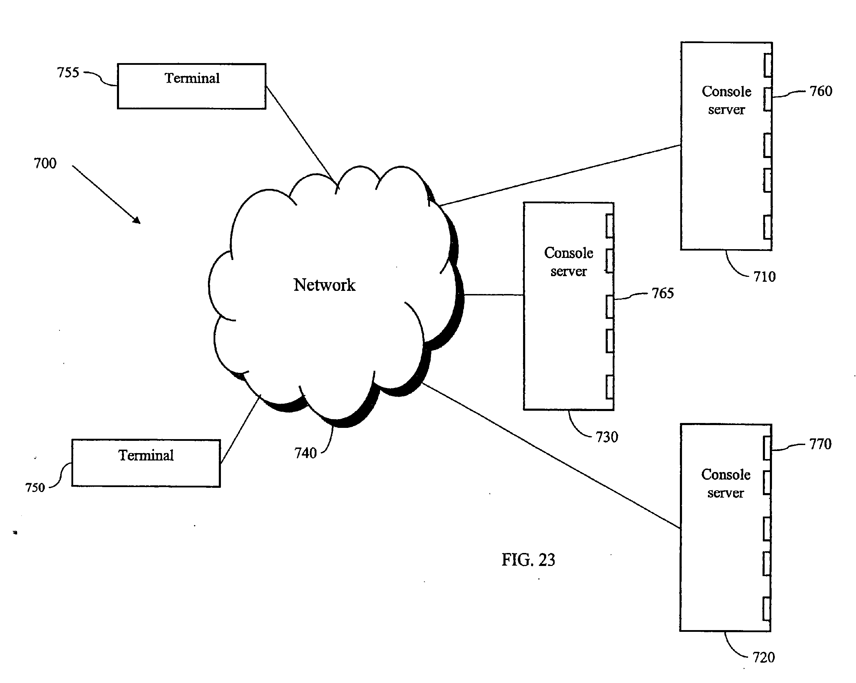

FIG. 23 shows a system 700 that includes plurality of console servers 710, 720, 730 connected to a network 740. In an example, information about port settings is transferred between or among console servers. In an example, a device is connected to a port 760 on a console 710, and a profile is generated for the device. The profile is transmitted to a second console serve 720. If the device is recognized at a port 770 on the second console server 720, port settings are applied to the port 770 on the second console server 720 using a profile or other information about the port settings obtained from the first console server.

In another example, a console server 730 is a master console server, and other console servers 710, 720 are slave console servers. A profile or other information about port settings for a device is transferred from a first server 710 to the master console 730, and is then transmitted to the other slave console server 720.

When a device is disconnected from slave console server 710 and reconnected to master console server 730 or slave console server 720, port settings are applied to the port to which the device is connected using the information about the port settings applied on the first console server. In an example, the port settings on the first console server 710 are set manually by a human administrator. Transferring the settings to other console servers allows a port to which the device is connected to be configured by the console server without further input from a human administrator. In another example, port settings associated with an operating system, a device model and/or device type are transferred between or among console servers. When another device of the same device model or type or running the same operating system is recognized, port settings are applied using information about the port settings applied on the first console server.

The above specification, examples and data provide a complete description of the manufacture and use of the composition of the invention. Since many embodiments of the invention can be made without departing from the scope of the invention, the invention resides in the claims hereinafter appended.

## Claims

1. A method of accessing a plurality of devices, for use with a console server having a user interface, a network connection and a plurality of ports, the plurality of devices including one or more first devices and one or more second devices and each first device including a console port, and the method comprising:
communicatively coupling a port of the console server to the console port of each of the one or more first devices;
communicatively coupling the network connection of the console server to each of the one or more of the second devices across a network;
accessing device management processes on the connected first and second devices via the console server; and
outputting information regarding each of the connected first and second devices via the console server user interface.

2. The method of claim 1, wherein accessing includes configuring the first device through its console port.

3. The method of claim 2, wherein each second device includes a network connection and wherein accessing includes configuring the second device through its network connection.

4. The method of claim 3, wherein accessing includes monitoring operation of the second device through its network connection.

5. The method of any preceding claim, wherein each second device includes an assigned name and an operating system and wherein accessing includes:
recording in a port log information received from one of the connected second devices; and
executing instructions that read the information in the port log and determine the assigned name and the operating system of the second device from the information in the port log.

6. The method of claim 5, wherein accessing includes executing instructions that analyze a boot sequence in the port log.

7. The method of any preceding claim, wherein accessing includes executing instructions that apply settings to the first and second devices, the settings associated with one or more characteristics of the devices.

8. The method of any preceding claim, wherein accessing includes reading a profile associated with the second device and executing instructions that apply settings associated with the profile to the second device, the settings associated with one or more characteristics of the second device.

9. The method of any preceding claim, wherein communicatively coupling the network connection of the console server to each of the one or more of the second devices across a network includes:
providing an intermediate device, wherein the intermediate device includes a network connection and one or more ports;
communicatively coupling the port of the intermediate device to the console port of one of the second devices; and
communicatively coupling the network connection of the console server to the network connection of the intermediate device across a network.

10. The method of claim 9, wherein accessing includes configuring each device through its respective console port.

11. The method of claim 9, wherein accessing includes:
recording in a port log information received from each device; and
executing instructions in the console server that read the information in the port log and determine an assigned name for each device and an operating system running on each device.

12. The method of claim 9, wherein accessing includes:
recording in a port log information received from each device; and
executing instructions in the console server that analyze a boot sequence in the port log.

13. The method of claim 9, wherein accessing includes:
recording in a port log information received from each device;
executing instructions in the console server that analyze a boot sequence in the port log;
sending a probing transmission through one of the ports to the device communicatively coupled to the port, at least a part of the probing transmission a function of an aspect of the information acquired during analysis of the boot sequence;
receiving a response to the probing transmission from the device through the port; and
determining further information about the device from the response to the probing transmission.

14. The method of claim 9, wherein accessing includes executing instructions to apply settings to each device, the settings associated with one or more characteristics of the device communicatively coupled to each port.

15. The method of claim 9, wherein accessing includes reading a profile associated with each device and executing instructions that apply information read from the profile to its associated device, wherein the information includes information related to settings for each device.

16. A console server for accessing devices having console ports, the console server comprising:
a processor circuit;
memory connected to the processor circuit;
a network connection communicatively coupled to the processor circuit;
a plurality of ports, where each port is communicatively coupled to the processor circuit and wherein each port is capable of reading and writing information from a console port; and
means for accessing one or more remote ports across a network.

17. The console server of claim 16, wherein the means for accessing includes means for acquiring information from a device communicatively coupled to one of the remote ports.

18. The console server of claim 16 or 17, wherein the means for accessing includes means for acquiring information from a device communicatively coupled to one of the console server ports and means for writing information to a device communicatively coupled to one of the remote ports.

19. The console server of any one of claims 16 to 18, wherein the means for accessing includes memory connected to the processor circuit, wherein the memory includes instructions which, when executed by the processor circuit, cause the processor circuit to access a device connected to one of the console server ports via its console port and wherein the memory further includes instructions which, when executed by the processor circuit, cause the processor circuit to access a device connected to a port of an intermediate device by communicating with the intermediate device across a network.

20. The console server of claim 19, wherein the memory further includes instructions which, when executed by the processor circuit, cause the processor circuit to acquire information from a device communicatively coupled to one of the console server ports.

21. The console server of claim 19, wherein the memory further includes instructions which, when executed by the processor circuit, cause the processor circuit to acquire information from a device communicatively coupled to one of the console server ports and to write information to a device communicatively coupled to one of the console server ports.

22. A method comprising:
recording in a port log information received through a port on a console server from a device that is communicatively coupled to the port; and
executing instructions that read the information in the port log and determine an assigned name of the device and an operating system that is running on the device from the information in the port log.

23. The method of claim 22, wherein executing instructions includes executing instructions that analyze a boot sequence in the port log.

24. The method of claim 22 or 23, wherein executing instructions includes executing instructions that apply settings to the port, the settings associated with one or more characteristics of the device communicatively coupled to the port or the operating system that is running on the device.

25. The method of claim 24, wherein executing instructions includes executing instructions that retrieve information about the settings for a previous port to which the device was communicatively coupled, and apply settings to the port based upon the information about the settings for the previous port.

26. The method of any one of claims 22 to 25, wherein executing instructions includes:
sending a probing transmission through the port, the probing transmission associated with the operating system that is running on the device communicatively coupled to the port;
receiving a response to the probing transmission;
determining information about the operating system from the response to the probing transmission;
identifying a profile that is associated with information determined from the response to the probing transmission, the profile specifying port settings; and
applying to the port the settings specified by the profile.

27. The method of any one of claims 22 to 26, wherein executing instructions includes:
sending a probing transmission associated with the operating system through the port;
receiving a response to the probing transmission;
determining information about the operating system from the response to the probing transmission;
identifying at least one port setting that is a function of at least one aspect of the information about the operating system determined from the response to the probing transmission; and
applying the at least one port setting to the port.

28. A console server comprising:
a port connectable to a device through a serial connection;
a network connection in communication with the port, wherein a device communicatively coupled to the port is accessible through the network connection; a processor circuit in communication with the port; and
a memory circuit embodying executable instructions operable on by the processor, including instructions that acquire information from a device communicatively coupled to the port during a device boot sequence, determine information about the device from the information acquired from the device, and apply settings to the port based upon the information determined about the device.

29. The console server of claim 28, wherein the instructions that acquire information from a device communicatively coupled to the port include instructions that record in a port log information sent through port on the console server, and
the executable instructions that determine information about the device include instructions that determine from the information in the port log the assigned name of the device communicatively coupled to the port and the operating system that is running on the device.

30. The console server of claim 28 or 29, wherein the executable instructions include instructions that:
send a probing transmission through the port to the device communicatively coupled to the port, at least a part of the probing transmission a function of an aspect of the information acquired during the boot sequence,
receive a response to the probing transmission from the device through the port; and
determine further information about the device from the response to the probing transmission.

31. The console server of claim 30, wherein the executable instructions include instructions that identify a profile that is associated with information determined from the response to the probing transmission, the profile specifying port settings; and apply to the port the settings specified by the profile.

32. The console server of claim 30 or 31, wherein the executable instructions that determine information about the device include instructions that determine information about the operating system;
the instructions that send a probing transmission include instructions that send a probing transmission associated with at least one aspect of the information about the operating system; and
the instructions that determine further information about the device from the response to the probing transmission include instructions that determine further information about the operating system running on the device.

33. A method comprising:
acquiring from a device communicatively coupled to a first port on a console server port a first set of data;
determining from the first set of data information about the device including the identity of the device;
storing in a memory circuit information about port settings applied to the first port;
if the device is disconnected from the first port and communicatively coupled to a second port on the console server:
acquiring from the device through the second port a second set of data;
determining from the second set of data information about the device including the identity of the device, wherein the connection of the device to the second port is automatically recognized;
retrieving from the memory circuit the information about the port settings applied to the first port; and
applying to the second port at least one of the port settings applied to the first port, wherein the second port is automatically configured for communication with the device.

34. The method of claim 33, wherein acquiring from a device communicatively coupled to a first port on a console server port a first set of data includes recording in a port log data received through the first port; and
wherein determining from the first set of data information about the device includes determining information about the device from the data in the port log.

35. The method of claim 33 or 34, wherein acquiring from a device communicatively coupled to a first port on a console server port a first set of data includes sending a first probing transmission through the first port, and receiving a response to the first probing transmission from the device communicatively coupled to the first port.

36. The method of claim 35, wherein acquiring from a device communicatively coupled to a first port on a console server port a first set of data includes periodically sending a probing transmission through the first port and receiving a response, wherein the first port is periodically monitored for connection of a new device to the first port.

37. The method of claim 35 or 36, wherein:
determining from the first set of data information about the device includes determining an operating system running on the device;
acquiring from a device communicatively coupled to a first port on a console server port a first set of data further includes sending through the first port a second probing transmission associated with at least one aspect of information about the operating system determined from the response to the first probing transmission, and receiving a response to the second probing transmission; and
determining from the first set of data information about the device further includes determining information about the operating system from the response to the second probing transmission.

38. The method of claim 37, wherein storing in a memory circuit information about the port settings applied to the first port includes:
storing a profile that is associated with at least one aspect of the information determined from the response to the second probing transmission, the profile including port settings; and
applying to the second port at least one of the port settings applied to the first port includes applying to the second port the settings specified by the profile.

39. The method of any one of claims 33 to 38, wherein determining from the first set of data information about the device includes determining from the first set of data a location of the device communicatively coupled to the first port, and storing in a memory circuit information about port settings includes storing the location of the device.

40. The method of any one of claims 33 to 39, wherein determining from the first set of data information about the device includes determining an assigned name of the device and an operating system that is running on the device.

41. The method of claim 40, wherein storing in a memory circuit information about port settings applied to the first port includes assigning a name to the first port, the assigned name including information that identifies the assigned name of the device that is communicatively coupled to the port and the operating system that is running on the device that is communicatively coupled to the port, wherein information about the device is identifiable from the name assigned to the port to which the device is communicatively coupled.

42. The method of any one of claims 33 to 41, further comprising transmitting information about the port settings applied to the first port to a second console server, and, if the device is recognized at a second port on the second console server, applying to the second port at least one of the port settings applied to the first port, wherein the second port is automatically configured for communication with the device by the second console server.

43. The method of claim 42, wherein transmitting information about the port settings applied to the first port to a second console server includes transmitting the information about the port settings to a master console server and then transmitting the information about the port settings from the master console server to the second console server.

44. A carrier medium carrying computer readable code for controlling a computer to carry out the method of any one of Claims 1 to 15, 22 to 27 and 33 to 43.
